(19) Europäisches Patentamt

European Patent Office

Office européen des brevets

(11) **EP 1 563 006 B1**

(12) **EUROPÄISCHE PATENTSCHRIFT**

(45) Veröffentlichungstag und Bekanntmachung des Hinweises auf die Patenterteilung:
**29.03.2006  Patentblatt 2006/13**

(21) Anmeldenummer: 03789040.7

(22) Anmeldetag: **14.11.2003**

(51) Int Cl.:
*C08L 23/00* (2006.01)       *C08L 23/20* (2006.01)
*C08K 5/00* (2006.01)        *C08K 3/00* (2006.01)

(86) Internationale Anmeldenummer:
**PCT/EP2003/012728**

(87) Internationale Veröffentlichungsnummer:
**WO 2004/046240 (03.06.2004 Gazette 2004/23)**

(54) **POLYMERE ZUSAMMENSETZUNG**

POLYMER COMPOSITION

COMPOSITION POLYMERIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **16.11.2002  DE 10253376**

(43) Veröffentlichungstag der Anmeldung:
**17.08.2005  Patentblatt 2005/33**

(73) Patentinhaber: **Spezial Polymer Mannheim GmbH 68309 Mannheim (DE)**

(72) Erfinder:
• **FALLER, Bernhard**
  **69120 Heidelberg (DE)**

• **IMMEL, Steffen**
  **67063 Ludwigshafen (DE)**
• **IMMEL, Wolfgang**
  **67063 Ludwigshafen (DE)**

(74) Vertreter: **Kesselhut, Wolf Reble & Klose, Sophienstrasse 17 68165 Mannheim (DE)**

(56) Entgegenhaltungen:
**US-A- 4 758 354       US-A- 4 874 528
US-A- 5 215 595       US-A- 5 539 044**

**Beschreibung**

Die vorliegende Erfindung betrifft eine polymere Zusammensetzung, enthaltend ein hochmolekulares Polymeres und ein festes, teilchenförmiges Beschichtungsmittel. Weiterhin umfaßt die vorliegende Erfindung ein Verfahren zur Herstellung einer solchen polymeren Zusammensetzung sowie deren Verwendung als Widerstandsverminderer in Kohlenwasserstoffe führenden Pipelines, als Trennmittel von organischen Flüssigkeiten und Wasser, als Bestandteil von Mitteln zur Entfernung von organischen Flüssigkeiten sowie als Bestandteil von Sperrschichten, welche die Ausbreitung von organischen Flüssigkeiten verhindern.

Es ist bekannt, hochmolekulare Polymere, beispielsweise Polyisobutylen u.a., zur Bekämpfung unkontrollierter Ausschüttungen von mineralischen Kohlenwasserstoffen auf Wasser zu verwenden. Dabei vermischt man zweckmäßigerweise hochmolekulare Polymere mit Wasser und sprüht dieses Gemisch mit Hilfe einer Wasserkanone oder anderen Sprüheinrichtungen auf die mit mineralischen Kohlenwasserstoffen verunreinigte Wasseroberfläche auf. Dabei löst sich das hochmolekulare Polymere in dem mineralischen Kohlenwasserstoff und bildet einen sogenannten viskoelastischen Film, der u.a. mit Skimmern leicht entfernt werden kann.

Weiterhin beschreibt die DE-A 19727363 die Verwendung einer Zusammensetzung aus einem anorganischen Adsorbens und einem hochmolekularen Polymeren, insbesondere Polyisobutylen, als Mittel zur Adsorption von organischen Flüssigkeiten. Als anorganisches Adsorbens wird dabei vorzugsweise calcinierte Tonerde eingesetzt.

Gegenstand der DE-A 19834487 sind Vliese zur Adsorption von organischen Flüssigkeiten, welche aus anorganischen oder organischen Fasern und aus hochmolekularen Polymeren, insbesondere Polyisobutylen, bestehen.

In der US-A 5030591 wird ein Verfahren zur Entfernung von Flüssigkeiten wie beispielsweise Ölen auf festen Oberflächen beschrieben, wobei man einen adsorbierenden Feststoff mit mindestens 2 Gew.-%, bezogen auf die gesamte Zusammensetzung, eines fein verteilten Polymeren, welches in organischen Flüssigkeiten löslich ist, vermischt. Das dabei eingesetzte Polymer ist hochmolekular. Die erhaltene Mischung wird als Pulver auf die organischen Flüssigkeiten aufgetragen, mit diesen vermengt und anschließend gemeinsam mechanisch entfernt.

Die in diesen Publikationen beschriebenen hochmolekularen Polymere erfüllen im Wesentlichen die an sie gestellten Anforderungen, insbesondere hinsichtlich der Adsorption von organischen Flüssigkeiten. Für einige Anwendungsbereiche, insbesondere als Widerstandsverminderer in Kohlenwasserstoffe führenden Pipelines, besteht allerdings die Notwendigkeit, derartige hochmolekulare Polymere hinsichtlich ihrer viskoelastischen Eigenschaften weiter zu optimieren.

Die EP-B 289516 offenbart eine polymere Zusammensetzung aus einem hochmolekularen Polymeren und einem Beschichtungsmittel, wobei der mittlere Durchmesser der Teilchen des Beschichtungsmittels weniger als 1/10 des Durchmessers des Polymeren beträgt. Die beschriebene polymere Zusammensetzung wird u.a. als Widerstandsverminderer in Kohlenwasserstoffe führenden Pipelines verwendet, wobei aber ihre Eigenschaften noch verbesserungsfähig sind.

Darüber hinaus ist aus der WO 01/83650 ein Widerstandsverminderer für Kohlenwasserstoffe führende Pipelines auf Basis Polyisobutylen bekannt, wobei das Polyisobutylen in Form einer Suspension in Wasser verwendet wird und eine Molmasse (Viskositätsmittel Mv) von mindestens 7.200.000 aufweist. Dabei gestaltet sich die Herstellung einer solchen Suspension von Polyisobutylen in Wasser als relativ aufwendig. Überdies sind derartige Suspensionen technisch nicht leicht zu handhaben. Es bestand daher der Wunsch, ein hochmolekulares Polyisobutylen auch in einer günstigeren Form, beispielsweise als Feststoff, zur Widerstandsverminderung in Kohlenwasserstoffe führenden Pipelines einzusetzen.

Der vorliegenden Erfindung lag daher die Aufgabe zu Grunde, den geschilderten Nachteilen abzuhelfen und eine verbesserte polymere Zusammensetzung auf Basis eines hochmolekularen Polymeren zu entwikkeln, welches sich insbesondere als Widerstandsverminderer in Kohlenwasserstoffe führenden Pipelines hervorragend eignet und welches u.a. auch in Form eines Feststoffes eingesetzt werden kann.

Dementsprechend wurde eine neue polymere Zusammensetzung entwickelt, enthaltend ein hochmolekulares Polymeres mit einer Molmasse (Viskositätsmittel Mv) von mindestens 500.000 bis maximal 7.100.000 und 1 bis 50 Gew.-%, bezogen auf die gesamte Zusammensetzung, ein festes, teilchenförmiges Beschichtungsmittel, wobei das Beschichtungsmittel gegenüber dem hochmolekularen Polymeren nicht reaktiv ist und einen mittleren Teilchendurchmesser von mehr als 1/10 des mittleren Durchmessers der Polymerteilchen besitzt.

Vorzugsweise enthält die polymere Zusammensetzung 2 bis 40 Gew.-%, insbesondere 5 bis 30 Gew.-% und besonders bevorzugt 8 bis 20 Gew.-% des festen, teilchenförmigen Beschichtungsmittels, wobei sich die Angabe an Gew.-% jeweils auf die gesamte Zusammensetzung bezieht.

Als Beschichtungsmittel verwendet man u.a. anorganische Substanzen, wie beispielsweise Gesteinsmehl, Talkum, amorphes Siliciumdioxid, Kaolin, calcinierte Tonerden, Tonerden,

Graphit, Teflonpulver oder Tricalciumphosphat. Weitere geeignete anorganische Substanzen sind vor allem anorganische Salze der Alkalimetalle oder der Erdalkalimetalle sowie des Aluminiums, beispielsweise die entsprechenden Halogenide, Sulfate, Sulfite, Sulfide, Phosphate, Phosphite, Nitrate, Nitride sowie Oxide. Darüber hinaus können auch feinteilige Polymerpulver, beispielsweise fein verteiltes Polyethylen, Polypropylen oder andere feinverteilte Polyolefine oder aber Polymere des Styrols oder der Acrylsäure sowie Teflon als Beschichtungsmittel eingesetzt werden. Bevorzugte Beschichtungsmittel sind Metallsalze von Fettsäuren, insbesondere der Stearinsäure oder der Palmitinsäure sowie der Laurinsäure, der Ölsäure, der Linolsäure, der Linolensäure oder der Myristinsäure. Dabei empfiehlt es sich, insbesondere die entsprechenden Erdalkalisalze solcher Fettsäuren zu verwenden, also beispielsweise die Fettsäuresalze des Magnesiums, Calciums, Strontiums oder Bariums. Besonders bevorzugte Beschichtungsmittel sind Magnesiumstearat und Calciumstearat.

Selbstverständlich können auch Mischungen derartiger Beschichtungsmittel verwendet werden. Die erfindungsgemäß einzusetzenden Beschichtungsmittel dürfen gegenüber dem hochmolekularen Polymeren nicht reaktiv sein. Sie sind üblicherweise im Handel käuflich erhältlich.

Das in der erfindungsgemäßen polymeren Zusammensetzung vorliegende hochmolekulare Polymere weist eine Molmasse (Viskositätsmittel Mv) von mindestens 500.000 bis maximal 7.100.000, insbesondere von mindestens 1.000.000 bis maximal 6.800.000 und besonders bevorzugt von mindestens 2.000.000 bis maximal 6.500.000 auf.

Das Viskositätsmittel Mv wird aus der Lösungsviskosität einer Lösung des hochmolekularen Polymeren in Isooctan bei 20 °C nach DIN 53728 bestimmt. Als Meßgerät dient ein Ubbelohde-Viskosimeter. Das Viskositätsmittel Mv errechnet sich aus der Formel

$$\text{Mv} = \frac{0.65}{} \sqrt{\frac{\text{Jo} \times 100}{3.06}}$$

Die Ermittlung des zur Bestimmung des Viskositätsmittels Mv benötigten Staudingerindex Jo erfolgt nach der Schulz-Blaschke-Beziehung aus der gemessenen Grenzviskosität $\eta$ und der Lösungskonzentration.

Vorzugsweise wird das hochmolekulare Polymere als Polymerpulver mit einem mittleren Teilchendurchmesser von mindestens 50 $\mu$m, insbesondere von mindestens 100 $\mu$m und maximal 600 $\mu$m verwendet.

Geeignete hochmolekulare Polymere sind u.a. hochmolekulare Polyolefine, wie beispielsweise Polyethylene, Polypropylene oder Polybut-1-ene sowie Polymere von C5 - C20-Alk-1-enen, u.a. von Pent-1-en, Hex-1-en, Hept-1-en oder Oct-1-en, weiterhin hochmolekulares Polyisopren und Polybutadien sowie hochmolekulare Copolymere des Styrols mit untergeordneten Anteilen anderer Comonomerer, beispielsweise Butadien oder Acrylsäure und ferner hochmolekulare fluorhaltige Polymere u.a. auf der Basis von Vinylidenfluorid oder Hexafluorpropylen. Dabei können sowohl Homopolymere als auch Copolymere der vorgenannten Polymere verwendet werden. Als hochmolekulares Polymeres wird insbesondere hochmolekulares Polyisobutylen eingesetzt. Dieses wird vorzugsweise durch kationische Polymerisation von Isobutylen bei tiefen Temperaturen hergestellt und kann u.a. unter der Marke OPPANOL B® von der BASF Aktiengesellschaft bezogen werden. Die übrigen hochmolekularen Polymere sind ebenfalls im Kunststoffhandel ohne Schwierigkeiten erhältlich. Es können auch Gemische aus verschiedenen hochmolekularen Polymeren eingesetzt werden.

Bei der erfindungsgemäßen polymeren Zusammensetzung ist es weiterhin wesentlich, daß das feste, feinteilige Beschichtungsmittel einen mittleren Teilchendurchmesser von mehr als 1/10, insbesondere von mehr als 1/9,5 des mittleren Durchmessers der hochmolekularen Polymerteilchen aufweist. Besonders bevorzugt ist dabei eine solche polymere Zusammensetzung, deren festes, feinteiliges Beschichtungsmittel durch einen mittleren Teilchendurchmesser von mehr als 1/9 des mittleren Durchmessers der hochmolekularen Polymerteilchen gekennzeichnet ist. Das feste, feinteilige Beschichtungsmittel weist daher vorzugsweise einen mittleren Teilchendurchmesser von mindestens 5 $\mu$m, insbesondere einen mittleren Teilchendurchmesser von mindestens 6 $\mu$m und besonders bevorzugt von mindestens 10 $\mu$m auf. Der maximale mittlere Teilchendurchmesser des festen Beschichtungsmittels kann bis zu 100 $\mu$m betragen.

Weiterhin wurde ein neues, ebenfalls erfindungsgemäßes Verfahren zur Herstellung der erfindungsgemäßen polymeren Zusammensetzung gefunden, welches dadurch gekennzeichnet ist, daß man zunächst das hochmolekulare Polymere auf eine Temperatur unterhalb seiner Glasübergangstemperatur kühlt, anschließend dem hochmolekularen Polymeren das feste, teilchenförmige Beschichtungsmittel hinzufügt und dieses dann mit Hilfe von geeigneten Mischapparaturen mit dem hochmolekularen Polymeren vermischt, wobei der Mischungsvorgang in einer Atmosphäre aus einem inerten Gas und/oder Luft durchgeführt wird und wobei man danach die Temperatur der erhaltenen polymeren Zusammensetzung wieder auf die Glasübergangstemperatur des Polymeren und darüber erhöht.

Da die verwendeten hochmolekularen Polymeren üblicherweise Glasübergangstemperaturen von etwa -10 °C bis -100 °C aufweisen, bedeutet dies, dass die Mischung aus dem hochmolekularen Polymeren und dem festen, teilchenförmigen Beschichtungsmittel auf eine Temperatur unterhalb von -10 °C, insbesondere von -20 °C abgekühlt wird. Die Glasübergangstemperatur der verwendeten hochmolekularen Polymeren kann u.a. durch Bestimmung gemäß der ASTM D 3418-82 ermittelt werden.

Die Vermischung des hochmolekularen Polymeren und des Beschichtungsmittels erfolgt mit Hilfe üblicher, in der Technik verwendeter Mischapparaturen, beispielsweise Taumel-, Nauta, Faß- und Rhönradmischer oder Kugelmühlen sowie mit Hilfe von geeigneten Mischschnecken oder Extrudern. Häufig werden dabei die Mischapparaturen so ausgestaltet, daß das hochmolekulare Polymere und gegebenenfalls auch das Beschichtungsmittel während des Mischvorgangs noch zerkleinert wird. Üblicherweise dauert dieser Mischvorgang 10 bis 30 Minuten, vorzugsweise 15 bis 20 Minuten. Der Zerkleinerungsvorgang kann auch bereits vor dem Mischungsvorgang durchgeführt werden.

Nach dem erfindungsgemäßen Verfahren zur Herstellung der polymeren Zusammensetzung wird der Mischungsvorgang in einer Atmosphäre aus einem inerten Gas und/oder Luft durchgeführt. Geeignete inerte Gase sind u.a. Stickstoff oder Edelgase wie Helium, Neon oder Argon sowie Krypton, wobei Stickstoff bevorzugt eingesetzt wird. Es können auch Mischungen dieser inerten Gase verwendet werden.

Weiterhin ist es möglich, den Mischungsvorgang in einer Atmosphäre aus einem oder mehreren inerten Gasen und Luft durchzuführen, wobei dann darauf zu achten ist, daß dessen Sauerstoffgehalt unterhalb der Explosionsgrenze der polymeren Zusammensetzung liegt. Bevorzugt ist dabei auch ein Verfahren, nach dem der Mischungsvorgang in einer Atmosphäre aus einem Stickstoff-Luft-Gemisch durchgeführt wird, dessen Sauerstoffgehalt die Explosionsgrenze der polymeren Zusammensetzung unterschreitet.

Das erfindungsgemäße Verfahren zur Herstellung der polymeren Zusammensetzung ist in der Weise auszuführen, daß nach dem Mischungsvorgang, bei welchem auch das hochmolekulare Polymer und das Beschichtungsmittel zerkleinert werden kann, die Temperatur der erhaltenen polymeren Zusammensetzung wieder auf die Glasübergangstemperatur des hochmolekularen Polymeren und darüber erhöht wird.

Die erfindungsgemäße polymere Zusammensetzung zeigt in gelöster Form sehr gute viskoelastische Eigenschaften und eignet sich u.a. gut als Widerstandsverminderer in mineralische Kohlenwasserstoffe führenden Pipelines, durch welche Erdöl und andere organische Flüssigkeiten geleitet werden. Dabei empfiehlt es sich, dem Erdöl oder den organischen Flüssigkeiten die polymere Zusammensetzung in einer Menge von 1 bis 100 ppm, insbesondere in einer Menge von 2 bis 50 ppm und besonders bevorzugt in einer Menge von 5 bis 50 ppm hinzuzusetzen.

Darüber hinaus kann die erfindungsgemäße polymere Zusammensetzung auch als Trennmittel von organischen Flüssigkeiten, beispielsweise von flüssigen mineralischen Kohlenwasserstoffen und Wasser, Verwendung finden.

Aufgrund der speziellen Kombination aus hochmolekularen Polymeren und Beschichtungsmitteln, welche ein genau definiertes Teilchengrößenverhältnis gegenüber den Polymeren aufweisen, ist die erfindungsgemäße polymere Zusammensetzung auch über Monate hinweg gut lagerfähig, ohne dass eine nennenswerte Einschränkung ihrer Eigenschaften beobachtet werden kann.

Weiterhin kann die erfindungsgemäße polymere Zusammensetzung auch gut zur Entfernung von organischen Flüssigkeiten, beispielsweise von flüssigen mineralischen Kohlenwasserstoffen, insbesondere auf festen Oberflächen eingesetzt werden. In diesem Fall ist die polymere Zusammensetzung häufig auch Bestandteil von Mischungen, welche noch ein festes Adsorptionsmittel aufweisen. Geeignete feste Adsorptionsmittel sind u.a. zermahlene Kunststoffschäume, Kunststoffabfälle, Sägemehl, Baumrinden, Torf, Tonerden sowie vor allem calcinierte Tonerden, insbesondere Montmorillonite. Mit Hilfe der erfindungsgemäßen polymeren Zusammensetzung läßt sich beispielsweise Benzin, Dieselöl, Hydrauliköl, Erdöl, Paraffinöl, Benzol, Toluol, Phenol und Xylol gut von Oberflächen entfernen. Die erfindungsgemäße polymere Zusammensetzung läßt sich auch gut anwenden zur Entfernung von halogenierten flüssigen Kohlenwasserstoffen wie zum Beispiel Chlorbenzol, Tetrachlorkohlenstoff oder Methylenchlorid, ferner von anderen organischen Flüssigkeiten wie Schwefelkohlenstoff, Isooctan, Tetrahydrofuran oder Cyclohexan.

Die erfindungsgemäße polymere Zusammensetzung eignet sich neben der Anwendung auf festen Oberflächen, also auf allen Arten von Böden, auch für Wasseroberflächen wie Seen, Flüsse und Meere. Bei der Anwendung auf festen Böden können die organischen Flüssigkeiten rasch ohne großen verfahrenstechnischen Aufwand durch einfache mechanische Bearbeitung, beispielsweise durch Aufkehren, entfernt werden. Im Falle einer Anwendung auf Wasseroberflächen bildet das hochmolekulare Polymere einen viskoelastischen Film, der u.a. durch Absaugen, Skimmen oder den bei Ölunfällen häufig eingesetzten Matten leicht entfernt werden kann.

Die erfindungsgemäßen polymeren Zusammensetzungen können auch in Materialien für Sperrschichten Verwendung finden, deren Aufgabe es ist, das weitere Ausbreiten von organischen Flüssigkeiten oder deren tiefes Eindringen, beispielsweise in Erdreich, zu verhindern. Derartige Sperrschichten werden u.a. im Tiefbau, im Wasserbau und im Tunnelbau verwendet.

Beispiele:

**Vergleichsbeispiel A**

Es wurde ein ringförmiger Damm mit einem Außendurchmesser von ca. 60 cm und einem Innendurchmesser von ca. 35 cm aus einem calcinierten Montmorillonit als Adsorbens (A) mit einer Korngrößenverteilung (Teilchendurchmesser) von 0,1 bis 2 mm aufgeschüttet. Der ringförmige Damm wies eine Breite von 12 cm und eine Höhe von 10 cm auf. Dem Adsorbens war kein Polymer beigemischt.

In den durch den Damm gebildeten freien Raum wurden 4 mal je 1 Liter Benzin in Abständen von jeweils 1 Minute gegossen. Dabei stellte man optisch eine rasche Durchfeuchtung des Adsorbens mit dem Benzin fest. Nach ca. 3 Minuten trat das noch innerhalb des ringförmigen Dammes befindliche Benzin unter dem Damm nach außen aus. Ein Ausbreiten des Benzins konnte nicht verhindert werden.

Anschließend wurde soviel von dem calcinierten Montmorillonit aufgestreut, bis keine benzinfeuchten Stellen mehr zu erkennen waren. Der Benzin enthaltende calcinierte Montmorillonit wurde mehrmals über den Bereich der Benzinausschüttung mit einem Besen hin und her bewegt und dann zur Entsorgung weggekehrt. Am Boden zeigten sich nach dem Abspritzen mit Wasser Newton'sche Ringe, die aussagen, daß nicht alles Benzin adsorbiert war.

## Beispiel 1

Wie im Vergleichsbeispiel A beschrieben, wurde zunächst ein ringförmiger Damm mit den gleichen Dimensionen und aus dem gleichen calcinierten Montmorillonit als Adsorbens aufgeschüttet. Im Gegensatz zum Vergleichsbeispiel A enthielt das Adsorbens aber noch 0,5 Gew.-% Polyisobutylenpulver mit einem Molekulargewicht (Viskositätsmittel Mv) von 5.600.000, welches dem calcinierten Montmorillonit gleichmäßig untergemischt wurde. Das verwendete Polyisobutylen hatte einen mittleren Teilchendurchmesser von mehr als 100 μm und enthielt 15 Gew.-% Magnesiumstearat, dessen mittlerer Teilchendurchmesser 1/9 des mittleren Teilchendurchmessers des Polyisobutylens beträgt.

In den durch den Damm gebildeten freien Raum wurden 4 mal je 1 Liter Benzin in Abständen von jeweils 1 Minute gegossen. Dabei konnte man optisch feststellen, daß die Durchfeuchtung der Adsorbensmischung mit dem Benzin rasch zum Stehen kam. Das Benzin hatte nur etwa 1 bis 2 cm des Durchmessers des Dammes von innen nach außen hin durchdringend befeuchtet. Das restliche Benzin blieb innerhalb des ringförmigen Dammes. Auf diese Weise wirkt der Damm als Sperrschicht.

Zur Beseitigung des innerhalb des Dammes noch verbliebenen Benzins wurde noch soviel des calcinierten Montmorillonit-Polyisobutylenpulver-Gemisches zugegeben, bis keine Spur an Benzin mehr zu erkennen war. Das Benzin enthaltende Montmorillonit-Polyisobutylenpulver.

Gemisch wurde mehrmals über den Bereich der Benzinausschüttung mit einem Besen hin und her bewegt und dann zur Entsorgung weggekehrt.

Am Boden waren nach dem Abspritzen mit Wasser keine Newton'schen Ringe mehr erkennbar, was darauf schließen läßt, daß alles Benzin restlos entfernt werden konnte.

## Beispiel 2

Das Beispiel 2 wurde analog dem Beispiel 1 durchgeführt, allerdings mit einem calcinierten Montmorillonit, der 0,5 Gew.-% der erfindungsgemäßen polymeren Zusammensetzung, d.h. einer Mischung aus Polyisobutylen mit einem Molekulargewicht (Viskositätsmittel Mv) von 5.200.000 sowie 15 Gew.% Magnesiumstearat, dessen mittlerer Teilchendurchmesser 1/9 des mittleren Teilchendurchmesers des Polyisobutylen beträgt, enthielt. Das Benzin drang nur durch einen sehr kleinen Teil des Dammes, der das Ausbreiten des Benzins nach außen hin verhinderte.

Im Verhalten der Adsorbensmischung und mit dem Benzin zeigten sich keine Abweichungen gegenüber Beispiel 1. Am Boden konnte kein Benzin mehr festgestellt werden.

## Beispiele 3 und 4 und Vergleichsbeispiel B

Die Beispiele 1 und 2 sowie das Vergleichsbeispiel A wurden unter analogen Bedingungen wiederholt, wobei statt Benzin Dieselöl verwendet wurde. Während bei den Beispielen 3 und 4 der mit dem calcinierten Montmorillonit-Polyisobutylenpulver-Magnesiumstearat-Gemisch gebildete Damm ein Ausbreiten des Dieselöls wirksam verhindern konnte, trat dieses beim Vergleichbeispiel B nach etwa 4 Minuten nach außen hin aus.

Beim anschließenden Abspritzen des mit Dieselöl in Berührung gekommenen Untergrundes mit Wasser waren bei den Beispielen 3 und 4 keine Newton'schen Ringe, die noch auf Spuren von Dieselöl hindeuten können, zu sehen, wogegen man beim Vergleichsbeispiel B noch Spuren von Dieselöl beobachtete.

## Beispiele 5 und 6 und Vergleichsbeispiel C

Die Beispiele 1 und 2 sowie das Vergleichsbeispiel A wurden unter analogen Bedingungen wiederholt, wobei statt Benzin Hydrauliköl verwendet wurde. Während bei den Beispielen 5 und 6 der mit dem calcinierten Montmorillonit-Polyisobutylenpulver-Magnesiumstearat-Gemisch gebildete Damm ein Ausbreiten des Hydrauliköls wirksam verhindern konnte, trat dieses beim Vergleichbeispiel C ebenfalls, wenn auch aufgrund der höheren Eigenviskosität des Hydrauliköls im Vergleich zu Benzin und Dieselöl zeitlich verzögert, nach außen hin aus.

Beim anschließenden Abspritzen des mit Hydrauliköl in Berührung gekommenen Untergrundes mit Wasser waren bei den Beispielen 5 und 6 keine Newton'schen Ringe, die noch auf Spuren von Hydrauliköl hindeuten können, zu sehen, wogegen dies beim Vergleichsbeispiel C der Fall war.

## Vergleichsbeispiel D

Das Beispiel 1 wurde unter analogen Bedingungen wiederholt, wobei aber der calcinierte Montmorillonit jetzt 0,5 Gew.-% eines Gemisches aus einem Polyisobutylen mit einer Molmasse (Viskositätsmittel Mv) von 7.200.000 und 15 Gew.-% Magnesiumstearat enthielt. Beim analog zum Beispiel 1 durchgeführten Adsorptionstest mit Benzin zeigten sich, verglichen mit dem Beispiel 1 folgender Nachteil: Es konnte dabei beobachtet werden, daß das hochmolekulare Polyisobutylen durch aufgenommenes Benzin klebrige Fäden zog, die das anschließende mechanische Entfernen der adsorbierenden Zusammensetzung erheblich erschwerten.

**Beispiel 7**

Eine polymere Zusammensetzung gemäß dem Beispiel 1, bestehend aus einem Polyisobutylenpulver mit einem Molekulargewicht (Viskositätsmittel My) von 5.600.000 und 15 Gew.%, bezogen auf die gesamte polymere Zusammensetzung, Magnesiumstearat, wurde zur Widerstandsverminderung in Pipelines eingesetzt. Das dabei verwendete Magnesiumstearat hatte einen mittleren Teilchendurchmesser von 1/9 des mittleren Teilchendurchmessers des hochmolekularen Polyisobutylens. Der mittlere Teilchendurchmesser des Polyisobutylens lag bei mehr als 100 $\mu$m.

Die polymere Zusammensetzung wurde in einer Pipeline, die Rohöl transportiert, zur Widerstandsverminderung eingesetzt. Dazu fügte man 10 ppm der polymeren Zusammensetzung dem in der Pipeline transportierten Rohöl hinzu. Bei konstantem Pumpendruck beobachtete man eine Erhöhung der Fördermenge um ca. 40 %.

**Patentansprüche**

1. Polymere Zusammensetzung, enthaltend ein hochmolekulares Polymeres mit einer Molmasse (Viskositätsmittel Mv) von mindestens 500.000 bis maximal 7.100.000 und 1 bis 50 Gew.-%, bezogen auf die gesamte Zusammensetzung, ein festes, teilchenförmiges Beschichtungsmittel, wobei das Beschichtungsmittel gegenüber dem hochmolekularen Polymeren nicht reaktiv ist und einen mittleren Teilchendurchmesser von mehr als 1/10 des mittleren Durchmessers der Polymerteilchen besitzt.

2. Polymere Zusammensetzung nach Anspruch 1, wobei diese 5 bis 30 Gew.-%, bezogen auf die gesamte Zusammensetzung, an festem, teilchenförmigen Beschichtungsmittel aufweist.

3. Polymere Zusammensetzung nach den Ansprüchen 1 oder 2, wobei als feste, teilchenförmige Beschichtungsmittel Metallsalze von Fettsäuren verwendet werden.

4. Polymere Zusammensetzung nach dem Anspruch 3, wobei als feste, teilchenförmige Beschichtungsmittel Erdalkalisalze der Stearinsäure eingesetzt werden.

5. Polymere Zusammensetzung nach den Ansprüchen 1 bis 4, wobei das hochmolekulare Polymere eine Molmasse (Viskositätsmittel Mv) von mindestens 1.000.000 und maximal 6.800.000 aufweist.

6. Polymere Zusammensetzung nach den Ansprüchen 1 bis 5, wobei als hochmolekulares Polymeres Polyisobutylen verwendet wird.

7. Polymere Zusammensetzung nach den Ansprüchen 1 bis 6, wobei das hochmolekulare Polymere in Form eines solchen Polymeren eingesetzt wird, welches eine Teilchengröße von weniger bis gleich 600 $\mu$m aufweist.

8. Verfahren zur Herstellung einer polymeren Zusammensetzung gemäß einem der Ansprüche 1 bis 7, **dadurch gekennzeichnet, dass** man zunächst das hochmolekulare Polymere auf eine Temperatur unterhalb seiner Glasübergangstemperatur kühlt, anschließend dem hochmolekularen Polymeren das feste, teilchenförmige Beschichtungsmittel hinzufügt und dieses mit Hilfe geeigneter Mischapparaturen mit dem hochmolekularen Polymeren vermischt, wobei der Mischungsvorgang in einer Atmosphäre aus einem inerten Gas und/oder Luft durchgeführt wird und wobei man danach die Temperatur der polymeren Zusammensetzung wieder auf die Glasübergangstemperatur des Polymeren und darüber erhöht.

9. Verfahren zur Herstellung einer polymeren Zusammensetzung nach Anspruch 8, **dadurch gekennzeichnet, daß** man die Mischung aus dem hochmolekularen Polymeren und dem festen, teilchenförmigen Beschichtungsmittel auf eine Temperatur von unterhalb -10 °C abkühlt.

10. Verfahren zur Herstellung einer polymeren Zusammensetzung nach den Ansprüchen 8 oder 9, **dadurch gekennzeichnet, daß** der Mischungsvorgang in einer Atmosphäre aus Stickstoff durchgeführt wird.

11. Verfahren zur Herstellung einer polymeren Zusammensetzung nach den Ansprüchen 8 oder 9, **dadurch gekennzeichnet, daß** der Mischungsvorgang in einer Atmosphäre aus einem Stickstoff-Luft-Gemisch durchgeführt wird, dessen Sauerstoffgehalt unterhalb der Explosionsgrenze der polymeren Zusammensetzung liegt.

12. Verwendung der polymeren Zusammensetzung gemäß einem der Ansprüche 1 bis 7 als Widerstandsverminderer in Pipelines.

13. Verwendung nach Anspruch 12, wobei die polymere Zusammensetzung in einer Menge von 1 bis 100 ppm, bezogen auf die zu transportierende Flüssigkeit, insbesondere Erdöl, hinzugefügt wird.

**14.** Verwendung der polymeren Zusammensetzung gemäß einem der Ansprüche 1 bis 7 als Trennmittel von organischen Flüssigkeiten und Wasser.

**15.** Verwendung der polymeren Zusammensetzung gemäß einem der Ansprüche 1 bis 7 als Bestandteil von Mitteln zur Entfernung von organischen Flüssigkeiten.

**16.** Verwendung der polymeren Zusammensetzung gemäß einem der Ansprüche 1 bis 7 als Bestandteil von Sperrschichten, welche die Ausbreitung von organischen Flüssigkeiten verhindern.

**Claims**

**1.** Polymer composition containing a polymer of high molecular weight with a molar mass (viscosity average Mv) of at least 500,000 to at most 7,100,000 and containing from 1 to 50 % by weight, based on the total composition, of a solid particulate coating agent, wherein the coating agent is not reactive to the polymer of high molecular weight and has an average particle diameter of more than 1/10 of the average diameter of the polymer particles.

**2.** Polymer composition according to claim 1, wherein said composition contains from 5 to 30 % by weight, based on the total composition, of solid particulate coating agent.

**3.** Polymer composition according to either claim 1 or claim 2, wherein metallic salts of fatty acids are used as solid particulate coating agents.

**4.** Polymer composition according to claim 3, wherein alkaline earth salts of stearic acid are used as solid particulate coating agents.

**5.** Polymer composition according to claims 1 to 4, wherein the polymer of high molecular weight has a molar mass (viscosity average Mv) of at least 1,000,000 and at most 6,800,000.

**6.** Polymer composition according to claims 1 to 5, wherein polyisobutylene is used as the polymer of high molecular weight.

**7.** Polymer composition according to claims 1 to 6, wherein the polymer of high molecular weight is used in the form of a type of polymer which has a particle size of less than 600 $\mu$m to equal to 600 $\mu$m.

**8.** Process for the preparation of a polymer composition according to any one of claims 1 to 7, **characterised in that** the polymer of high molecular weight is initially cooled to a temperature below its glass transition temperature, the solid particulate coating agent is then added to the polymer of high molecular weight and is mixed with said polymer of high molecular weight by means of suitable mixing apparatus, the mixing operation being carried out under an inert gas and/or air atmosphere and the temperature of the polymer composition thereafter being increased again to the glass transition temperature of the polymer and to a higher temperature.

**9.** Process for the preparation of a polymer composition according to claim 8, **characterised in that** the mixture of the polymer of high molecular weight and the solid particulate coating agent is cooled to a temperature of below -10°C.

**10.** Process for the preparation of a polymer composition according to either claim 8 or claim 9, **characterised in that** mixing is carried out under a nitrogen atmosphere.

**11.** Process for the preparation of a polymer composition according to either claim 8 or claim 9, **characterised in that** mixing is carried out under a nitrogen air mixed atmosphere, the oxygen content of which lies below the explosive limit of the polymer composition.

**12.** Use of the polymer composition according to any one of claims 1 to 7 as a resistance reducer in pipelines.

**13.** Use according to claim 12, wherein the polymer composition is added in a quantity of from 1 to 100 ppm, based on the liquid to be transported, in particular petroleum.

**14.** Use of the polymer composition according to any one of claims 1 to 7 as an agent for separating organic liquids and water.

**15.** Use of the polymer composition according to any one of claims 1 to 7 as a component of means for removing organic liquids.

**16.** Use of the polymer composition according to any one of claims 1 to 7 as a component of barrier layers which prevent the spread of organic liquids.

**Revendications**

**1.** Composition polymère contenant un polymère de poids moléculaire élevé, présentant une masse molaire (moyenne par viscosité $M_v$) d'au moins 500 000 à maximum 7 100 000 et 1 à 50% en poids, par rapport à la composition totale, d'un agent de revêtement solide en forme de particules, l'agent de revêtement n'étant pas réactif par rapport au polymère de poids moléculaire élevé et présentant un diamètre de particule moyen supérieur à 1/10 du diamètre moyen des particules de polymère.

2. Composition polymère selon la revendication 1, celle-ci présentant 5 à 30% en poids, par rapport à la composition totale, d'agent de revêtement solide en forme de particules.

3. Composition polymère selon les revendications 1 ou 2, dans laquelle on utilise comme agent de revêtement solide, en forme de particules, des sels métalliques d'acides gras.

4. Composition polymère selon la revendication 3, dans laquelle on utilise comme agent de revêtement solide, en forme de particules, des sels alcalino-terreux de l'acide stéarique.

5. Composition polymère selon les revendications 1 à 4, dans laquelle le polymère à poids moléculaire élevé présente une masse molaire (moyenne par viscosité $M_v$) d'au moins 1 000 000 et d'au maximum 6 800 000.

6. Composition polymère selon les revendications 1 à 5, dans laquelle on utilise comme polymère de poids moléculaire élevé le polyisobutylène.

7. Composition polymère selon les revendications 1 à 6, dans laquelle le polymère de poids moléculaire élevé est utilisé sous forme d'un polymère qui présente une grosseur de particules inférieure ou égale à 600 $\mu$m.

8. Procédé pour la préparation d'une composition polymère selon l'une quelconque des revendications 1 à 7, **caractérisé en ce qu'**on refroidit d'abord le polymère de poids moléculaire élevé à une température inférieure à sa température de transition vitreuse, on ajoute ensuite au polymère de poids moléculaire élevé l'agent de revêtement solide, en forme de particules et on mélange celui-ci, à l'aide d'appareils de mélange appropriés, avec le polymère de poids moléculaire élevé, le processus de mélange étant réalisé dans une atmosphère d'un gaz inerte et/ou d'air et la température de la composition polymère étant ensuite à nouveau augmentée à la température de transition vitreuse du polymère et au-dessus de celle-ci.

9. Procédé pour la préparation d'une composition polymère selon la revendication 8, **caractérisé en ce qu'**on refroidit le mélange du polymère de poids moléculaire élevé et de l'agent de revêtement solide, en forme de particules à une température inférieure à -10°C.

10. Procédé pour la préparation d'une composition polymère selon les revendications 8 ou 9, **caractérisé en ce que** le processus de mélange est réalisé dans une atmosphère d'azote.

11. Procédé pour la préparation d'une composition polymère selon les revendications 8 ou 9, **caractérisé en ce que** le processus de mélange est réalisé dans une atmosphère d'un mélange azote/air dont la teneur en oxygène est inférieure à la limite d'explosion de la composition polymère.

12. Utilisation de la composition polymère selon l'une quelconque des revendications 1 à 7 comme agent de diminution de la résistance dans des pipelines.

13. Utilisation selon la revendication 12, dans laquelle la composition polymère est ajoutée en une quantité de 1 à 100 ppm, par rapport au liquide à transporter, en particulier le pétrole brut.

14. Utilisation de la composition polymère selon l'une quelconque des revendications 1 à 7 comme agent de séparation de liquides organiques et d'eau.

15. Utilisation de la composition polymère selon l'une quelconque des revendications 1 à 7 comme constituant d'agents pour éliminer les liquides organiques.

16. Utilisation de la composition polymère selon l'une quelconque des revendications 1 à 7 comme constituant de couches de blocage qui empêchent l'étalement de liquides organiques.